# EUROPÄISCHE PATENTANMELDUNG

(11) **EP 2 071 154 A2**
(43) Veröffentlichungstag der Anmeldung: **17.06.2009**
(21) Anmeldenummer: 08170431.4
(22) Anmeldetag: 02.12.2008
(51) Int. Cl.: F02C 6/12, F01D 25/14

(54) **Wärmeschutzwand für einen Abgasturbolader einer Brennkraftmaschine**

(30) Priorität: 13.12.2007 DE 102007060043
(71) Anmelder: Bosch Mahle Turbo Systems GmbH & Co. KG, 70376 Stuttgart (DE)
(72) Erfinder: Steidten, Thomas, 71636 Ludwigsburg (DE); Laubender, Jochen, 71706 Markgröningen (DE); Wengert, Andreas, 71549 Auenwald (DE); Rauscher, Martin, 71636 Ludwigsburg (DE)
(74) Vertreter: Bongen, Renaud & Partner

(57) **Zusammenfassung**

Die Erfindung betrifft einen Abgasturbolader (1) für eine Brennkraftmaschine, mit einem Turbinenteil (3), einem Verdichterteil (4) und einem zwischen Turbinenteil (3) und Verdichterteil (4) angeordneten Lagerteil (5), wobei das Turbinenteil (3) ein Turbinengehäuse (6) und das Lagerteil (5) ein Lagergehäuse (8) aufweist und das Lagerteil (5) zum Turbinenteil (6) mittels einer Wärmeabschirmung (31) abgeschirmt ist. Es ist vorgesehen, dass mindestens eine Wand (20,23,25,26) des Turbinengehäuses (6) und/oder Lagergehäuses (8) zur Bildung der Wärmeabschirmung (31) aus einem wärmeisolierenden, formstabilen Material (30) besteht.

## Beschreibung

Die Erfindung betrifft einen Abgasturbolader für eine Brennkraftmaschine, mit einem Turbinenteil, einem Verdichterteil und einem zwischen Turbinenteil und Verdichterteil angeordneten Lagerteil, wobei das Turbinenteil ein Turbinengehäuse und das Lagerteil ein Lagergehäuse aufweist und das Lagerteil zum Turbinenteil mittels einer Wärmeabschirmung abgeschirmt ist.

### Stand der Technik

Ein derartiger Abgasturbolader geht aus der EP 0 270 384 B1 hervor. Derartige Abgasturbolader dienen der Aufladung von Verbrennungsmotoren. Hierzu wird über die Turbine eines Turbinenteils des Abgasturboladers Abgas des Verbrennungsmotors geführt, wodurch ein Verdichterrad eines Verdichterteils des Abgasturboladers angetrieben und hierdurch Verbrennungsluft für den Verbrennungsmotor leistungssteigernd komprimiert wird. Um dem zur Verfügung stehenden Platz im Motorraum eines den Verbrennungsmotor aufweisenden Fahrzeugs gerecht zu werden, ist es erforderlich, den Abgasturbolader sehr kompakt zu bauen. Die Laufräder von Turbine und Verdichter sind mittels eines Lagerteils des Abgasturboladers drehbar gelagert, wobei sich das Lagerteil zwischen Turbinenteil und Verdichterteil befindet. Aufgrund der hohen Abgastemperaturen im Turbinenteil ergibt sich ein hoher Wärmeeintrag vom Turbinenteil zum Lagerteil und von dort zum Verdichterteil, das heißt, es kommt zu hohen Wärmeströmen von der heißen Abgasseite hin zur Frischluftseite des Abgasturboladers. Dies wirkt sich im Verdichterteil in verschiedener Weise negativ aus. Zum Einen wird die von ihm verdichtete Luft zusätzlich erwärmt, was zu einem Leistungsabfall im Verbrennungsmotor führt und zum Beispiel mittels eines eventuell vergrößerten, nachgeschalteten Ladeluftkühlers kompensiert werden muss. Zum Anderen wird die Luft durch das Verdichten erwärmt und ihre Temperatur zusätzlich durch den vom Turbinenteil kommenden Wärmestrom erhöht. Dies führt zu einem Regeleingriff auf der Turbinenseite, der eine Erhöhung des Abgasgegendrucks bewirkt, was schließlich den Gesamtsystemwirkungsgrad reduziert. Aus diesem Grunde ist es bekannt, zwischen dem Turbinenteil und dem Lagerteil eine Wärmeabschirmung vorzusehen, die als zwischen den beiden Gehäusen dieser Teile angeordnete Schutzschildwand aus wärmedämmendem Material ausgebildet ist. Auf diese Art und Weise lässt sich der Verdichterwirkungsgrad und somit der Gesamtsystemwirkungsgrad verbessern. Auch ist es dann nicht erforderlich, den üblicherweise vorhandenen, nachgeschalteten Ladeluftkühler größer zu dimensionieren. Hinzu tritt der Vorteil, dass durch die genannte wärmestromdämmende Maßnahme an der Turbine ein Wärmeeintrag ins Lagergehäuse und damit ins Schmieröl reduziert wird, sodass Überhitzungen des Schmieröls und eine damit einhergehende Verkokung beziehungsweise Versottung der Lager vorgebeugt ist. Die axial zwischen Turbinenteil und Lagerteil angeordnete, bekannte Wärmeabschirmung führt jedoch zu einer zusätzlichen Baulängenvergrößerung und ist hinsichtlich ihrer Abschirmwirkung noch verbesserungswürdig.

### Offenbarung der Erfindung

Aufgrund der erfindungsgemäßen Maßnahme, mindestens eine Wand des Turbinengehäuses und/oder Lagergehäuses zur Bildung der Wärmeabschirmung aus einem wärmeisolierenden, formstabilen Material herzustellen, werden die genannten, wärmetechnischen Vorteile erzielt und gleichzeitig eine Baugrößenreduzierung erreicht, da zwischen Turbinenteil und Verdichterteil keine Wärmeschutzmaßnahmen geschaltet werden müssen, sondern mindestens eines der beiden Teile selbst in sich die Wärmeschutzmaßnahme trägt, dadurch, dass eine Wand, die an das entsprechend andere Teil angrenzt, selbst die Wärmeabschirmung bildet und gleichzeitig auch tragende Funktion übernehmen kann, da das verwendete, wärmeisolierende Material ein formstabiles Material ist. Ferner wird durch die Erfindung eine besonders wirksame Wärmeisolation erzielt, da keine Wärmebrücken vorhanden sind. Sofern sowohl eine Wand des Turbinengehäuses, als auch eine Wand des Lagergehäuses aus dem wärmeisolierenden formstabilen Material besteht und diese Wände axial aneinandergrenzen, ist ein doppelter, also ein besonders wirksamer, Wärmeschutz realisiert.

Nach einer Weiterbildung der Erfindung ist vorgesehen, dass das Material eine Keramik und/oder ein Kunststoff, insbesondere ein Duroplast, ist.

Ferner ist es vorteilhaft, wenn das Verdichterteil ein Verdichtergehäuse aufweist und mindestens eine Wand des Verdichtergehäuses und/oder Lagergehäuses zur Bildung einer Wärmeabschirmung zwischen Lagerteil und Verdichterteil ebenfalls aus dem wärmeisolierenden, formstabilen Material besteht. Hierdurch ist nicht nur eine Wärmebarriere zwischen Turbinen- und Lagerteil, sondern auch noch zwischen Lagerteil und Verdichterteil geschaffen, sodass der vom Turbinenteil ausgehende Wärmestrom zwei, in Reihe zueinander liegende Wärmebarrieren passieren muss und auf diese Weise sehr stark reduziert wird.

Nach einer Weiterbildung der Erfindung ist vorgesehen, dass die wärmeisolierende Wand des Turbinengehäuses eine Rückwand des Turbinengehäuses ist. Vorteilhafterweise ist die wärmeisolierende Wand oder sind die wärmeisolierenden Wände des Lagergehäuses eine Stirnwand oder Stirnwände des Lagergehäuses. Die wärmeisolierende Wand des Verdichtergehäuses ist vorzugsweise eine Rückwand des Verdichtergehäuses. Die Anordnung ist dabei derart getroffen, dass die Rückwand des Turbinengehäuses - in axialer Richtung - gegen eine Stirnwand des Lagergehäuses anliegt und dass die andere Stirnwand des Lagergehäuses - ebenfalls in axialer Richtung - an der Rückwand des Verdichtergehäuses anliegt. Die den beiden Rückwänden von dem Turbinengehäuse und dem Verdichtergehäuse gegenüberliegende Wände bilden Vorderwände der entsprechenden Bauteile.

Zusätzlich zu den bereits genannten Wärmeschutzmaßnahmen kann vorgesehen sein, dass zwischen Gehäusebereichen von Turbinengehäuse, Lagergehäuse und/oder Verdichtergehäuse mindestens ein Schutzschild angeordnet ist. In diesem Falle ist also eine Dreiteiligkeit gegeben, das heißt ein Gehäusebereich von zum Beispiel dem Turbinengehäuse liegt einem Gehäusebereich von zum Beispiel dem Lagergehäuse mit Abstand gegenüber, wobei der Abstand von dem Wärmeschutzschild überbrückt wird. Derartige Maßnahmen können insbesondere in Mantelwandbereichen der verschiedenen Bauteile realisiert werden, wobei diese Mantelwandbereiche zur erwähnten axialen Richtung radial beabstandet sind, vorzugsweise koaxial verlaufen. Die erwähnten Gehäusebereiche können zusätzlich oder alternativ zu den genannten Mantelwandabschnitten auch Stirnwandabschnitte und/oder Rückwandabschnitte von Turbinengehäuse, Lagergehäuse und/oder Verdichtergehäuse sein.

### Kurze Beschreibung der Zeichnungen

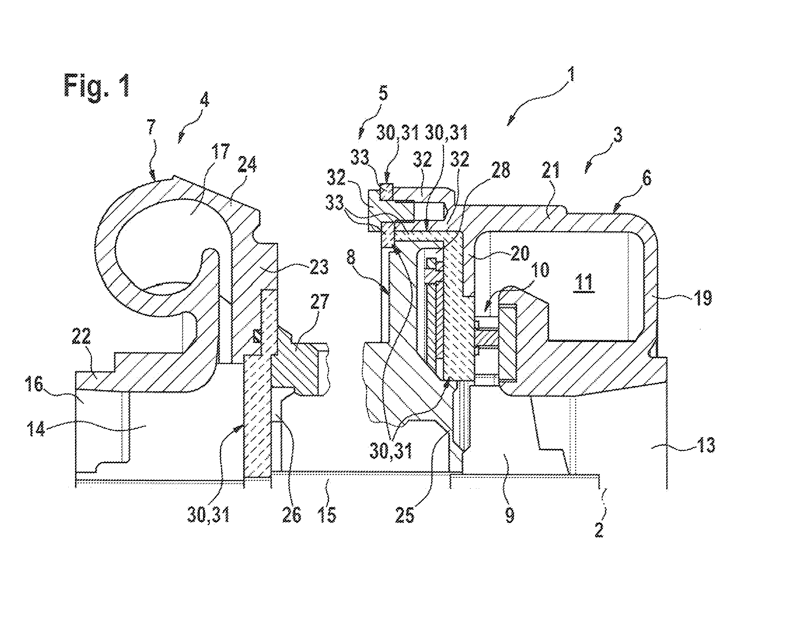

Die Zeichnung veranschaulicht die Erfindung anhand eines Ausführungsbeispiels, und zwar zeigt die Figur einen Längsschnitt durch eine Hälfte eines Abgasturboladers.

### Ausführungsform(en) der Erfindung

Die Figur zeigt einen Abgasturbolader 1 im Längsschnitt. Dargestellt wird lediglich eine Hälfte des Abgasturboladers 1, die an einer Mittellängsachse 2 endet. Die Mittellängsachse 2 erstreckt sich in axialer Richtung des Abgasturboladers 1.

Der Abgasturbolader 1 weist ein Turbinenteil 3 und ein Verdichterteil 4 sowie ein zwischen Turbinenteil 3 und Verdichterteil 4 liegendes Lagerteil 5 auf, wobei letzteres auch als Zentralteil bezeichnet wird. Das Turbinenteil 3 weist ein Turbinengehäuse 6, das Verdichterteil 4 ein Verdichtergehäuse 7 und das nur bereichsweise, nämlich abgebrochen dargestellte Lagerteil 5 ein Lagergehäuse 8 auf.

Im Turbinengehäuse 6 ist ein Turbinenrad 9 drehbar um die Mittellängsachse 2 gelagert. Das Turbinenrad 9 wirkt mit radialen, stillstehenden, im Anstellwinkel verstellbaren Leitschaufeln 10 zusammen, an die ein ringförmiger Abgaszuführraum 11 angrenzt. Im Betrieb wird von einer nicht dargestellten Brennkraftmaschine kommendes, heißes Abgas dem Abgaszuführraum 11 und dann über die Leitschaufeln 10 dem Turbinenrad 9 zugeführt. Vom Turbinenrad 9 strömt das Abgas anschließend aus einem axialen Auslass 13 zu einer nicht dargestellten Abgasanlage der Brennkraftmaschine. Insbesondere ist vorgesehen, dass sich die Brennkraftmaschine nebst Abgasturbolader 1 in einem Kraftfahrzeug befinden.

Das Verdichtergehäuse 7 weist ein Verdichterrad 14 auf, das ebenfalls um die Mittellängsachse 2 drehbar gelagert ist, da es zusammen mit dem Turbinenrad 9 auf einer gemeinsamen Welle 15 drehfest angeordnet ist. Die Welle 15 durchsetzt das Lagergehäuse 8, in dem sich nicht dargestellte Lager zur Lagerung der Welle 15 befinden. Dem Verdichterrad 14 sind ein axialer Frischlufteinlass 16 und ein radialer, vorzugsweise schneckenförmiger Auslass 17 zugeordnet. Im Betrieb treibt das heiße Abgas das Turbinenrad 9 und damit das Verdichterrad 14 an, welches Frischluft durch den Frischlufteinlass 16 ansaugt und verdichtet aus dem Auslass 17 ausstößt, wobei die verdichtete Frischluft dann der Brennkraftmaschine als Verbrennungsluft zugeführt wird.

Das Turbinengehäuse 6 weist eine Vorderwand 19 und eine Rückwand 20 sowie eine Mantelwand 21 auf. Das Verdichtergehäuse 7 weist eine Vorderwand 22, eine Rückwand 23 sowie eine Mantelwand 24 auf. Das Lagergehäuse 8 besitzt Stirnwände 25 und 26 sowie eine Mantelwand 27. Zwischen der Stirnwand 25 und der Rückwand 20 des Turbinengehäuses 6 ist ein ringförmiger Hohlraum 28 ausgebildet, in dem eine Verstelleinrichtung 29 zum Verstellen der Leitschaufeln 10 angeordnet ist. Hierzu wird die Rückwand 20 von geeigneten Stellmitteln durchgriffen.

Der Figur ist deutlich entnehmbar, dass die Rückwand 20 des Turbinengehäuses 6 nicht aus dem gleichen Material besteht, wie das übrige Turbinengehäuse 6, sondern aus einem anderen Material 30, das wärmeisolierend und formstabil ist und daher eine Wärmeabschirmung 31 bildet. Aufgrund der Formstabilität des Materials 30 wird eine tragende Funktion der Rückwand 20 des Turbinengehäuses 6 realisiert. Mithin wird eine erfindungsgemäße, im Stand der Technik bisher aus üblichem Gehäusematerial gefertigte Wand des Turbinengehäuses 6 nunmehr aus einem anderen, nämlich einem wärmeisolierenden und formstabilen Material 30 hergestellt.

Entsprechendes gilt für die Rückwand 23 des Verdichtergehäuses 7, die bereichsweise ebenfalls aus dem formstabilen, wärmeisolierenden Material 30 hergestellt ist. Insofern wird auch dort eine Wärmeabschirmung 31 realisiert. Da die Rückwände 20 und 23 Axialwände des Abgasturboladers 1 bilden, wird verhindert, dass ein Wärmestrom vom heißen Abgas des Turbinenteils 3 über das Lagerteil 5 zum Verdichterteil 4 gelangt. Vielmehr wird ein derartiger Wärmestrom wesentlich reduziert, sodass die eingangs genannten, nachteiligen Wirkungen nicht auftreten.

Zusätzlich ist vorgesehen, dass zwischen Gehäusebereichen 32 von Turbinengehäuse 6 und Lagergehäuse 8 Wärmeschutzschilder 33 angeordnet sind, die ebenfalls aus dem wärmeisolierenden, formstabilen Material 30 bestehen. Auf diese Art und Weise werden direkte Kontaktzonen der genannten Bauteile vermieden, die zu einer starken Wärmeübertragung führen würden.

Wie bereits erwähnt, werden durch die erfindungsgemäßen Einbauten Wärmeströme von der Turbine zum Verdichter hin verringert. Hierdurch wird die Gastemperatur der verdichteten Frischluft nah an die eines idealen, isentropen Verdichtungsprozesses herangeführt. Insgesamt wird dadurch der Verdichterwirkungsgrad und damit der Gesamtsystemwirkungsgrad verbessert. Aufgrund der Erfindung erfolgt eine Verringerung der Verdichterleistungsaufnahme, sodass es zu der genannten Gesamtwirkungsgradverbesserung führt, was sich auch in einer Verbrauchsreduktion wiederspiegelt. Es ist aufgrund der erfindungsgemäßen Vorgehensweise möglich, einen dem Abgasturbolader nachgeschalteten, nicht dargestellten Ladeluftkühler entsprechend klein zu dimensionieren. Ferner lässt sich die Gesamtanordnung relativ klein bauen, woraus auch eine Gewichtsreduktion resultiert, was wiederum - bei einem Fahrzeug - zu einem verringerten Zyklusverbrauch führt. Sollte man - wie oben erwähnt - keine Ladeluftkühlerverkleinerung vornehmen, so ist es alternativ auch möglich, die Ladeluftkühlerluftbaugröße gegenüber dem Stand der Technik beizubehalten und damit die Verbrennungslufttemperatur im Saugrohr weiter abzusenken. Hierdurch kommt es insbesondere bei Otto-Motoren zu einer Verminderung der Klopfneigung, was wiederum zu einer Gesamtwirkungsgraderhöhung führt, und bei Dieselmotoren zu einer Absenkung der NOx-Emissionen. Ferner wird das für die Lagerung im Lagergehäuse 8 verwendete Schmieröl durch die erfindungsgemäßen, wärmedämmenden Maßnahmen vor Überhitzung geschützt.

Bei dem wärmeisolierenden, formstabilen Material 30 handelt es sich insbesondere um eine Keramik. Alternativ kann auch ein Kunststoff verwendet werden, insbesondere ein Duroplast. Die vorstehend erwähnten Wärmeschutzschilde, die ebenfalls aus dem genannten Material 30 bestehen, bilden quasi wärmedämmende "Dichtungen" zwischen den verschiedenen Gehäusen des Abgasturboladers 1.

## Patentansprüche

1. Abgasturbolader für eine Brennkraftmaschine, mit einem Turbinenteil, einem Verdichterteil und einem zwischen Turbinenteil und Verdichterteil angeordneten Lagerteil, wobei das Turbinenteil ein Turbinengehäuse und das Lagerteil ein Lagergehäuse aufweist und das Lagerteil zum Turbinenteil mittels einer Wärmeabschirmung abgeschirmt ist, **dadurch gekennzeichnet, dass** mindestens eine Wand (20,23,25,26) des Turbinengehäuses (6) und/oder Lagergehäuses (8) zur Bildung der Wärmeabschirmung (31) aus einem wärmeisolierenden, formstabilen Material (30) besteht.

2. Abgasturbolader nach Anspruch 1, **dadurch gekennzeichnet, dass** das Material (30) eine Keramik und/oder ein Kunststoff, insbesondere ein Duroplast, ist.

3. Abgasturbolader nach einem der vorhergehenden Ansprüche, **dadurch gekennzeichnet, dass** das Verdichterteil (4) ein Verdichtergehäuse (7) aufweist und dass mindestens eine Wand (23) des Verdichtergehäuses (7) und/oder des Lagergehäuses (8) zur Bildung einer Wärmeabschirmung (31) des Lagerteils (5) gegenüber dem Verdichterteil (4) ebenfalls aus wärmeisolierendem, formstabilen Material (30) besteht.

4. Abgasturbolader nach einem der vorhergehenden Ansprüche, **dadurch gekennzeichnet, dass** die wärmeisolierende Wand (20) des Turbinengehäuses (6) eine Rückwand (20) des Turbinengehäuses (6) ist.

5. Abgasturbolader nach einem der vorhergehenden Ansprüche, **dadurch gekennzeichnet, dass** die wärmeisolierende Wand (25,26) oder dass die wärmeisolierenden Wände (25,26) des Lagergehäuses (8) eine Stirnwand (25,26) des Lagergehäuses (8) ist oder Stirnwände (25,26) des Lagergehäuses (8) sind.

6. Abgasturbolader nach einem der vorhergehenden Ansprüche, **dadurch gekennzeichnet, dass** die wärmeisolierende Wand (23) des Verdichtergehäuses (7) eine Rückwand (23) des Verdichtergehäuses (7) ist.

7. Abgasturbolader nach einem der vorhergehenden Ansprüche, **dadurch gekennzeichnet, dass** zwischen Gehäusebereichen von Turbinengehäuse (6), Lagergehäuse (8) und/oder Verdichtergehäuse (7) mindestens ein Wärmeschutzschild (33) angeordnet ist.

8. Abgasturbolader nach einem der vorhergehenden Ansprüche, **dadurch gekennzeichnet, dass** das Wärmeschutzschild (33) ebenfalls aus dem wärmeisolierenden, formstabilen Material (30) besteht.

9. Abgasturbolader nach einem der vorhergehenden Ansprüche, **dadurch gekennzeichnet, dass** die Gehäusebereiche Mantelwandabschnitte, Stirnwandabschnitte und/oder Rückwandabschnitte von Turbinengehäuse (6), Lagergehäuse (8) und/oder Verdichtergehäuse (7) sind.
